# EUROPEAN PATENT APPLICATION

(11) **EP 1 349 067 A2**
(43) Date of publication of application: **01.10.2003**
(21) Application number: 03251612.2
(22) Date of filing: 17.03.2003
(51) Int. Cl.: G06F 11/14, G06F 11/07

(54) **Document management system and method with fault recovery**

(30) Priority: 22.03.2002 JP 2002081942
(71) Applicant: Ricoh Company Ltd., Tokyo 143-8555 (JP)
(72) Inventor: Hayano, Hiroki, Ohta-ku, Tokyo 143 (JP); Maeda, Kaoru, Ohta-ku, Tokyo 143 (JP); Ikeda, Tetsuya, Ohta-ku, Tokyo 143 (JP)
(74) Representative: Leeming, John Gerard

(57) **Abstract**

In a document management system including a plurality of document storing devices storing document information, respectively, a recording device records progress status information of an operation of each document storing device. A retrieving device checks, when the document management system is activated, the recorded progress status information of an operation of each document storing device to retrieve a document storing device that cannot be activated. A progress status information acquiring device acquires from the recording device progress status information of an operation of the retrieved document storing device. A fault recovery process content acquiring device acquires a content of a fault recovery process relative to the retrieved document storing device based upon the acquired progress status information of an operation of the retrieved document storing device. An executing device automatically executes the acquired content of a fault recovery process relative to the retrieved document storing device.

## Description

The present application claims priority and contains subject matter related to Japanese Patent Application NO. 2002-081942 filed in the Japanese Patent Office on March 22, 2002, and the entire content of which are hereby incorporated by reference.

The present invention relates to electronic document management, and in particular relates to a document management system and a fault recovering method and computer program product for a document management system that automatically recover a document information storing device that cannot be activated due to abnormal ending in a previous operation of the document information storing device.

Various automatic fault recovery systems for computer systems have been known. For example, an automatic recovery system and method for recovery from a fault occurring when a computer system is in operation is described in Japanese Patent Application Laid-open publication No. 2001-005693. Error codes and error levels are associated with each other in advance in an error level coordinating table, and if an error occurs, an application program transfers an error code to an error level determining part. The error level determining part retrieves an error level by the error code from the error level coordinating table. If the error level is "a database fault", a database recovery processing part is activated. The application program receives the error level, and if the error level is either "a database fault" or "a temporary environment fault", rerun of the application program is performed, and if the error level is "an application fault", abnormal ending of the application program is performed.

Japanese Patent Application Laid-open publication No. 07-056793 describes an automatic file fault recovery system for a computer system, which performs a file fault recovering process quickly and correctly without requiring involvement of an operator by automating processes of monitoring a file fault occurrence and recovering from a fault. Monitoring of a file fault occurrence is automatically performed, and when a fault occurs in a file, a fault recovering procedure for recovering the file is generated based upon detailed file management information of the file and the kind of the file and the fault. Based upon the generated fault recovering procedure, a necessary fault recovering job control sentence is generated, and an automatic fault recovery is performed based upon the fault recovering job control sentence.

Japanese Patent Application Lain-open publication No. 10-320254 describes a database recovering system capable of recovering a database by interactive processing. At the time of starting a database, an automatic recovery processing device automatically performs a recovering process for a database fault. When the recovering process is unsuccessful, aninteractive recovery processing device retrieves a recovery pocedure table storing recovery procedures and recovery level for respective database faults using the database fault as a key to acquire a recovery procedure and a recovery level necessary for recovering the database fault. Then, according to the acquired recovery procedure and recovery level, a database recovering process is performed by interactive processing with an operator.

The recovery system and method of JP2001-005693 and the automatic file fault recovery system of JP07-056793 both relate to a computer system, not to a document management system. Further, both systems do not check faults when starting an operation of a system. Therefore, even if these systems are applied to a document management system, contents of faults cannot be known before accessing a cabinet that is constituted of a database storing a plurality of document data and files necessary for constructing the cabinet so that a same process can be performed to the plurality of document data in a batch processing mode.

The database recovery system of JP10-320254 involves interactive processing in recovering a database fault that cannot be automatically recovered, and certain knowledge is necessary in performing the interactive processing.

The present invention has been made in view of the above-discussed and other problems and addresses the above-discussed and other problems.

Preferred embodiments of the present invention provide a novel document management system and fault recovery method that, when a cabinet cannot be activated due to abnormal ending occurred when the cabinet was being operated (e.g., the system has abnormally ended without performing a normal ending process due to power failure), identifies the cabinet that cannot be activated and quickly recovers an incomplete state of the cabinet without involving an experienced system engineer.

According to a preferred embodiment of the present invention, in a document management system including a plurality of document storing devices storing document information, respectively, a recording device records progress status information of an operation of each document storing device. A retrieving device checks, when the document management system is activated, the recorded progress status information of an operation of each document storing device to retrieve a document storing device that cannot be activated. A progress status information acquiring device acquires from the recording device progress status information of an operation of the retrieved document storing device. A fault recovery process content acquiring device acquires a content of a fault recovery process relative to the retrieved document storing device based upon the acquired progress status information of an operation of the retrieved document storing device. An executing device automatically executes the acquired content of a fault recovery process relative to the retrieved document storing device.

In the above-described document management system, further, a normal ending assurance file generating device may generate a normal ending assurance file when the document management system has normally ended. In this case, a normal ending assurance file existence checking device checks, when the document management system is activated, existence of the normal ending assurance file, and a normal ending assurance file deleting device deletes the normal ending assurance file after the document management system has been activated.

Further, in the above-described document management system, the plurality of document storing devices may be cabinets, and the recording device recording progress status information of an operation of each cabinet may be a catalogue DB configured to manage basic information of the cabinet.

Furthermore, in the above-described document management System, the recording device may be configured to record process step information indicating process steps of the operation of each document storing device or cabinet and a plurality of checking points for defining a starting position to start a recovery process.

Still further, the above-described document management system may further include a process step information acquiring device configured to acquire, when the document management system is activated, process step information of the retrieved document storing device or cabinet from the recording device to identify a process step of the operation of the retrieved document storing device or cabinet in which the document management system has abnormally ended, and a recovering process executing device configured to execute the recovery process starting from a checking point that is before and nearest to the process step in which the document management system has abnormally ended.

Thus, the document management system of the present invention is configured to automatically recover a fault document storing device or cabinet according to a progress status thereof, so that a fault in the document management system can be quickly recovered without involving an experienced service engineer.

Further, a normal ending assurance file is generated when the document management system has normally ended, and when the document management systems is activated next time, whether the document management system has normally ended can be known by checking existence of a normal ending assurance file, so that checking of progress status of each document storing device or cabinet is not necessary and thereby the time required for starting the document management system is decreased.

Furthermore, the document management system manages basic information of each document storing device or cabinet by a catalogue DB recording progress status information of an operation of each document storing device or cabinet in a similar manner as in a document management DB of the document storing device or cabinet, so that synchronizing an updating timing for the basic information of each document storing device or cabinet with the document management DB of the document storing device or cabinet is easy.

Still further, the document management system of the present invention manages progress status information of an operation of each document storing device or cabinet with respect to process steps of the operation together with checking points defining a starting position to start a recovering process, so that by starting the recovering process from a process step nearest to the process step where an abnormal end has occurred, starting the recovering process from a position unnecessarily close to the start of the operation is avoided and the time required for recovering is decreased.

According to another preferred embodiment of the present invention, a recovering method for a document management system is provided. The method includes the steps of: recording progress status information of an operation of each cabinet of the document management system by a recording device; checking, when the document management system is activated, the recorded progress status information of an operation of each cabinet to retrieve a cabinet that cannot be activated; acquiring from the recording device progress status information of an operation of the retrieved cabinet; acquiring a content of a fault recovery process relative to the retrieved cabinet based upon the acquired progress status information of an operation of the retrieved cabinet; and automatically executing the acquired content of a fault recovery process relative to the retrieved cabinet.

The recovering method may further include the steps of: generating, when the document management system has normally ended, a normal ending assurance file; checking, when the document management system is activated, existence of the normal ending assurance file; and deleting the normal ending assurance file after the document management system has been activated.

Further, in the above-described recovering method, the recording step may record the progress status information of each cabinet in a catalogue DB for managing basic information of each cabinet.

Furthermore, in the above-described recovering method, the recording step may record process step information indicating process steps of the operation of each cabinet and a plurality of checking points for defining a starting position to start a recovery process.

Still further, the above-described recovering method may include the steps of: acquiring, when the document management system is activated, process step information of the retrieved cabinet from the recording device to identify a process step of the operation of the retrieved cabinet in which the document management system has abnormally ended; and executing the recovery process starting from a checking point that is before and nearest to the process step in which the document management system has abnormally ended.

A more complete appreciation of the present invention and many of the attendant advantages thereof will be readily obtained as the same becomes better understood by reference to the following detailed description when considered in conjunction with the accompanying drawings, wherein:
FIG. 1 is a diagram illustrating a document management system according to a preferred embodiment of the present invention, which is applied in a network system;
FIG. 2 is a diagram schematically illustrating an exemplary construction of the document management system;
FIG. 3 is a flowchart for explaining a procedure for deleting a specific cabinet of the document management system;
FIG. 4 is a flowchart for explaining a procedure of processes performed when the document management system has ended abnormally;
FIG. 5 is a diagram illustrating another exemplary construction of the document management system according to another preferred embodiment of the present invention;
FIG. 6 is a flowchart for explaining a procedure of a recovering process of the document management system of the another preferred embodiment that is performed when the document management system has abnormally ended;
FIG. 7 is a diagram illustrating another exemplary construction of the document management system according to still another preferred embodiment of the present invention; and
FIG. 8 is a diagram illustrating a flowchart for explaining a procedure of a recovering process of the document management system of the still another preferred embodiment.

Referring now to the drawings, wherein like reference numerals designate identical or corresponding parts throughout the several views, preferred embodiments of the present invention are described.

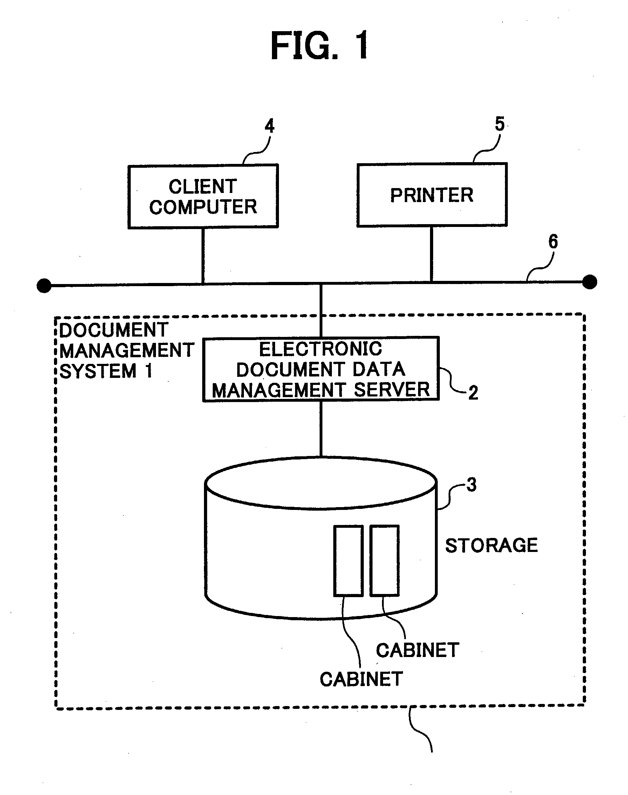

FIG. 1 illustrates a document management system 1 according to a preferred embodiment of the present invention, which is applied in a network system. In the example of FIG. 1, the document management system 1 is used as a server of electronic document data. The document management system 1 includes a management server 2 for the electronic document data and a storage 3 storing a plurality of cabinets. The document management system 1 is connected with other apparatuses, such as a client computer 4 and a printer 5, via a network 6. The document management system 1 receives and stores document data in the cabinets, and reads out the stored document data from the cabinets.

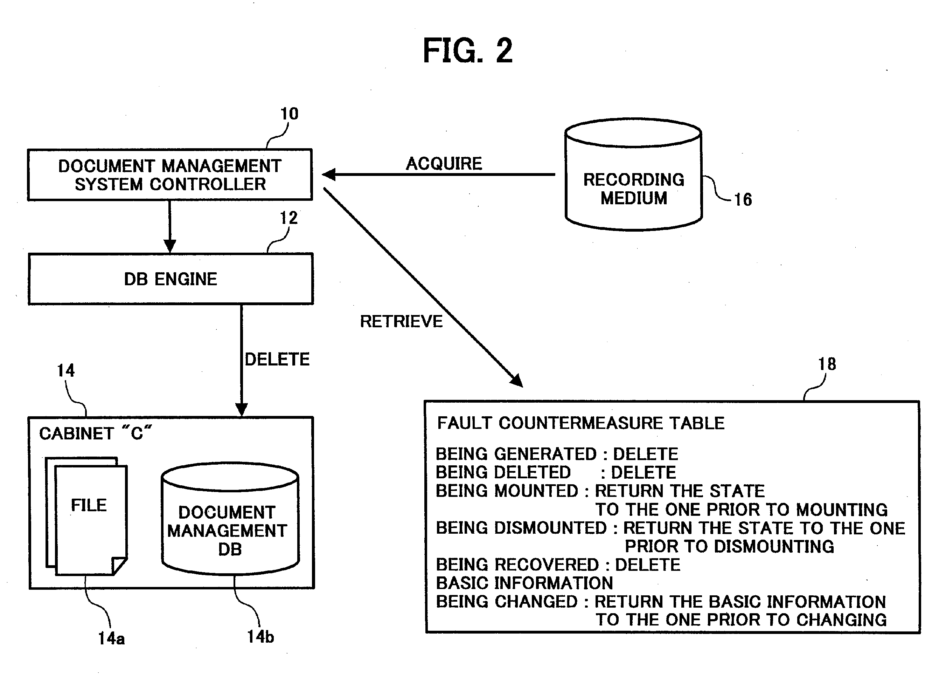

FIG. 2 schematically illustrates an exemplary construction of the document management system 1. As illustrated in figure, the document management system 1 includes a document management system controller 10 that performs control of the entire system of the document management system 1, a DB engine 12 that operates a document management DB in each cabinet according to an instruction of the document management system controller 10, a cabinet "C" 14 that stores document information, and a recording medium 16 for recording progress information of operations of the document management system 1. Symbol 14a denotes files necessary for constructing the cabinet "C" 14, and symbol 14b denotes a document management DB of the cabinet "C" 14.

The document management system 1 is configured such that, when operating the cabinet "C" 14 with the DB engine 12, for example when generating or deleting the cabinet "C" 14, the generating or deleting operation is performed after recording progress information of the operation, i.e., information that the cabinet "C" 14 is being generated or deleted, in the recording medium 16 which is separate from the document management DB 14b.

When the document management system 1 is activated, the document management system controller 10 checks the progress status of each cabinet in the document management system 1 (in the example of FIG. 2, only the cabinet "C" 14 is illustrated) , retrieves a cabinet which cannot be started to operate after abnormal ending of the document management system 1 at the previous operation of the cabinet, acquires progress status information with respect to the cabinet at the time of the abnormal ending from a record of the recording medium 16, and performs a recovery process corresponding to the acquired progress status information according to a procedure described later.

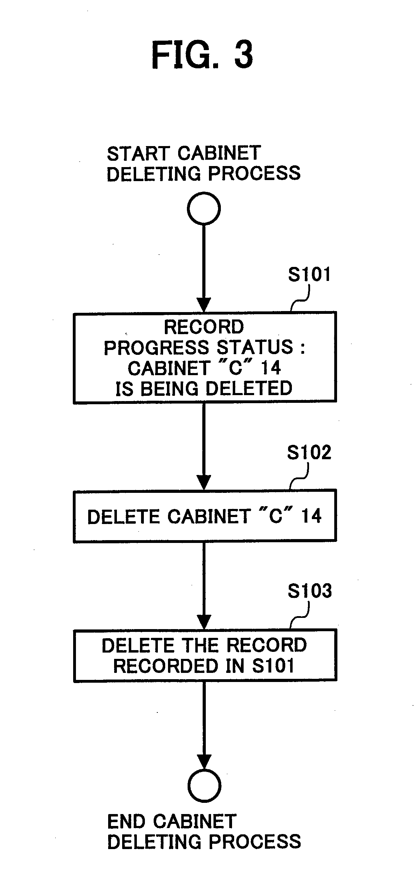

FIG. 3 is a flowchart for explaining a procedure for deleting a specific cabinet (in the example of FIG. 2, the cabinet "C" 14).

The document management system controller 10 records information of a progress status of an operation of deleting the cabinet, i.e., in this example, the information that the cabinet "C" 14 is being deleted, in the recording medium 16 (S101). Thereafter, the process proceeds to deleting of the cabinet "C" 14 (S102). Here, if the document management system 1 abnormally ends during the deleting process of the cabinet "C" 14, a recovery process is performed according to a procedure described later.

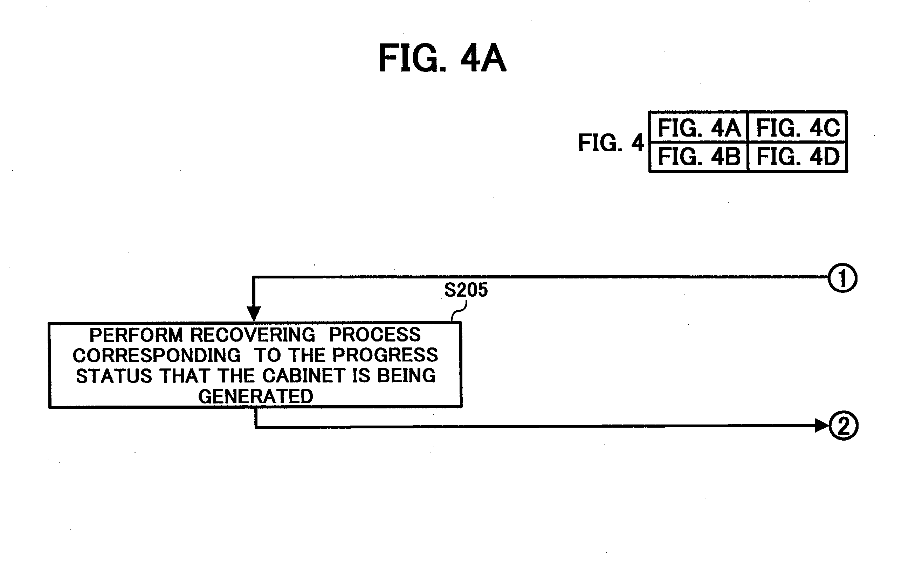

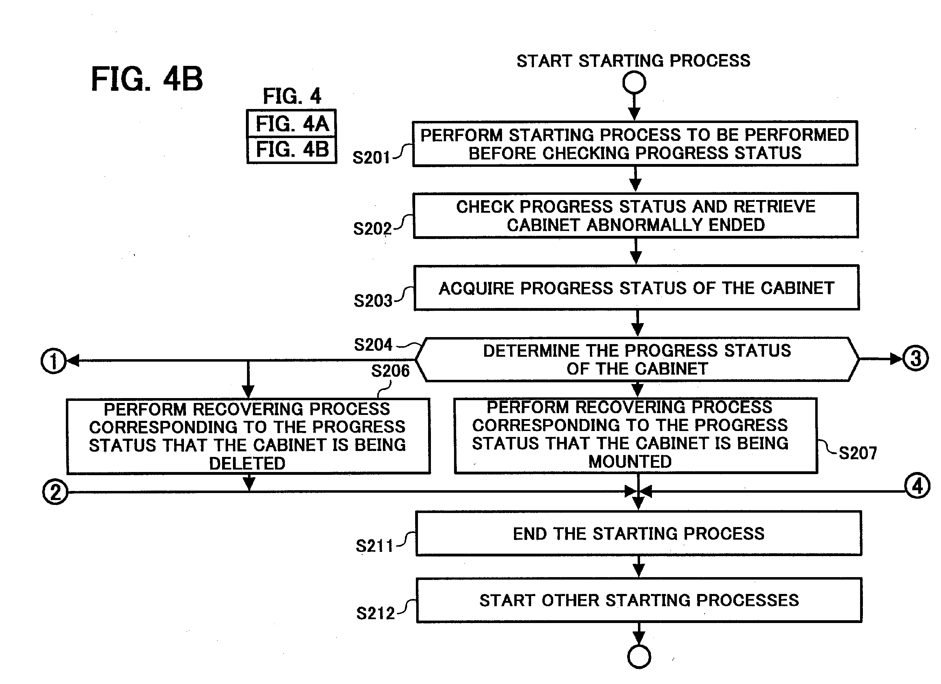

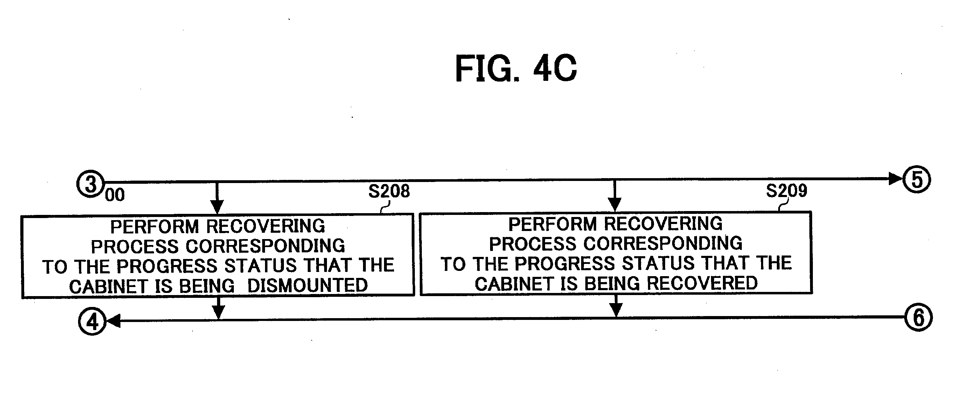

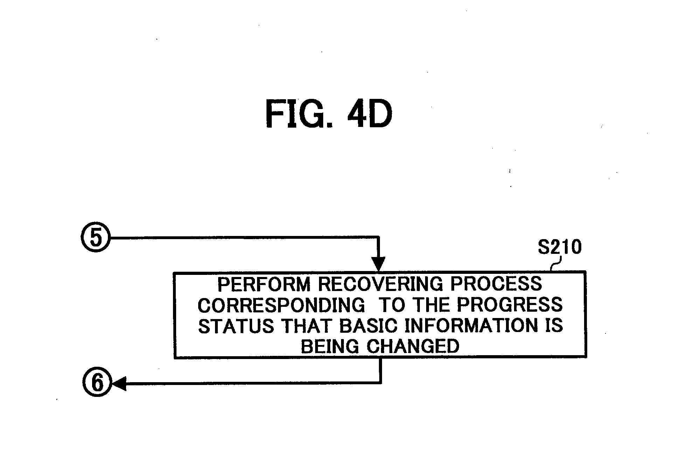

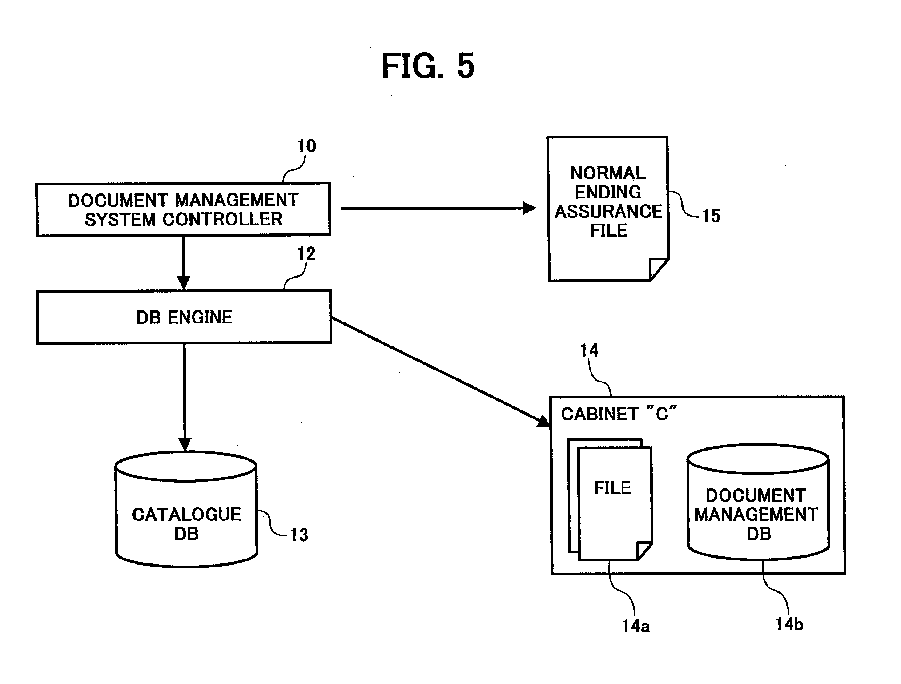

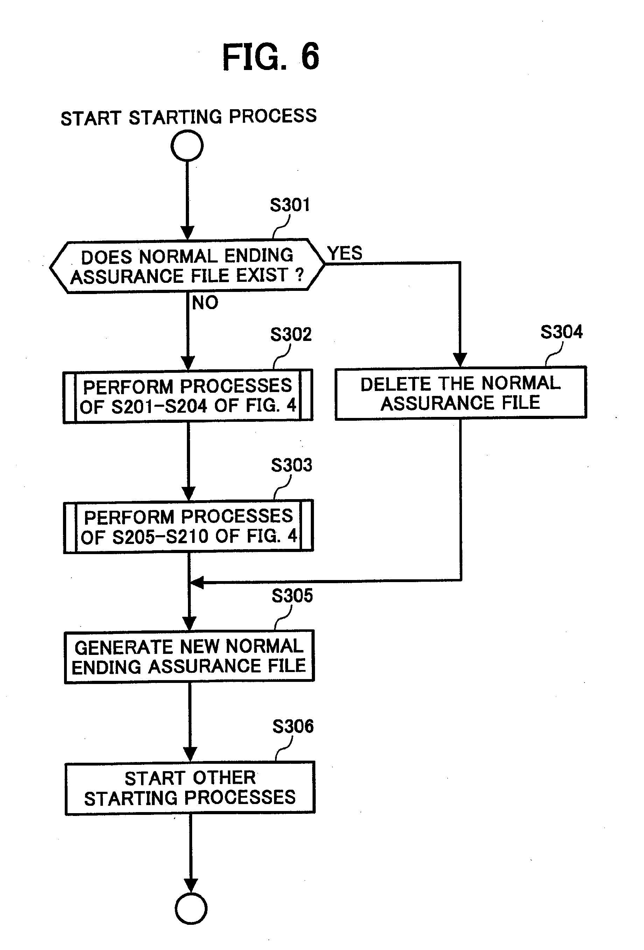

FIG. 4 is a flowchart for explaining a procedure of processes performed when the document management system 1 has abnormally ended.

When the document management system 1 starts to operate, first, a starting process that is necessary to be performed, before checking the progress status information, at the time the document management system controller 10 is activated, is performed (S201). For example, when a catalogue DB (described later) exists, the catalogue DB is opened. Then, the progress status information of an operation relative to each cabinet stored (in the example of FIG. 2, only the cabinet "C" 14 is illustrated) in the recording medium 16 is checked to retrieve a cabinet that has been abnormally ended during a previous operation (S202), and progress status information of the cabinet is acquired from the recording medium 16 (S203). If the acquired progress status information indicates either of "being generated", "being deleted", "being mounted", "being dismounted", and "being recovered" (S204), a corresponding recovering process specified in the countermeasure table 18 of FIG. 2 is performed (S205-S210). Specifically, when the progress status information indicates "being generated", i.e., the cabinet "C" 14 has been abnormally ended when the cabinet "C" 14 is being generated, an operation of deleting the cabinet "C" 14 is performed. When the progress status information indicates "being deleted", i.e., the cabinet "C" 14 has been abnormally ended when the cabinet "C" 14 is being deleted, an operation of deleting the cabinet "C" 14 is performed. When the progress status information indicates "being mounted" or "being dismounted, i.e., the cabinet "C" 14 has been abnormally ended when the cabinet "C" 14 is being mounted or dismounted, an operation of returning the state to the one prior to mounting or dismounting of the cabinet "C" 14 is performed. When the progress status information indicates "during recovering", i.e., the cabinet "C" 14 has been abnormally ended when the cabinet "C" 14 is being recovered, an operation of deleting the cabinet "C" 14 is performed. When the progress status information indicates "during changing of the basic information", i.e., the cabinet "C" 14 has been abnormally ended when the basic information of the cabinet "C" 14 (e.g., the cabinet number, the kind of conversion that can be applied to the cabinet, etc.) is being changed, an operation of returning the state to the one prior to changing of the basic information is performed. After completing the recovering process, the other starting operations start (S212).

FIG. 5 illustrates another exemplary construction of the document management system 1 according to another preferred embodiment of the present invention.

The document management system 1 includes the document management system controller 10, the DB engine 12, a catalogue DB 13 that stores cabinet information and manages the progress status information of an operation of each cabinet as well, the cabinet "C" 14, and a normal ending assurance file 15.

According to this another preferred embodiment, when the document management system controller 10 normally ends a process of operating a cabinet, for example, with respect to an operation of generating a cabinet, when all of necessary process steps for generating the cabinet (described later) normally end and thereby the cabinet has been generated, the normal ending assurance file 15 that records that the operation has been successfully ended is generated, and then the process of generating the cabinet ends. By thus generating the normal ending assurance file 15, when the document management system 1 is activated next time, the document management system controller 10 can know whether or not the document management system 1 has been abnormally ended last time by only checking if a normal ending assurance file exists. Thus, in this embodiment, it is not necessary to check the progress status information of an operation relative to each cabinet recorded in the recording medium 16 to retrieve a cabinet that has been abnormally ended at the previous operation as in the previous embodiment. The document management system controller 10 deletes the normal ending assurance file 15 after the document management system 1 has been activated, and generates another normal ending assurance file 15 when an ending process has normally ended.

The normal ending assurance file 15 is generated for example at a recording device (not shown) connected with the document management system controller 10. However, the normal ending assurance file 15 can be generated at anywhere in the document management system 1 as long as existence thereof can be easily confirmed.

FIG. 6 illustrates a flowchart for explaining a procedure of a recovering process of the document management system 1 of the above-described another preferred embodiment. When starting the starting process described with respect to FIG. 4, as a part of the starting process , existence of a normal ending assurance file is checked (S301), and if a normal ending assurance file exists (YES in step 301) , because it is confirmed that the previous operation has normally ended, the normal ending assurance file is deleted (S304). Then, a new normal ending assurance file is generated (S305), and the other starting operations start (S306).

If a normal ending file does not exist (NO in step S301), because it has been confirmed that the previous operation has abnormally ended, the recovering processes of the steps S205 through S210 of FIG. 4 are performed (S303). After completing the recovering processes and the process of the step S305, the other starting operations start (S306).

Here, the catalogue DB 13 is a database provided for holding information on each cabinet to manage the cabinet. The progress status information of an operation of each cabinet, e.g., the information that an operation of the cabinet is being started, is also managed in the catalogue DB 13. Because the catalogue DB 13 is provided for holding information of each cabinet, unlike a document management database provided in the cabinet (in the example of FIG. 5, the document management DB 14b in the cabinet "C" 14) , the existence period thereof is made to be identical to that of the document management system controller 1 and to be a unique one, and the catalogue DB 13 is configured not to be newly generated or deleted.

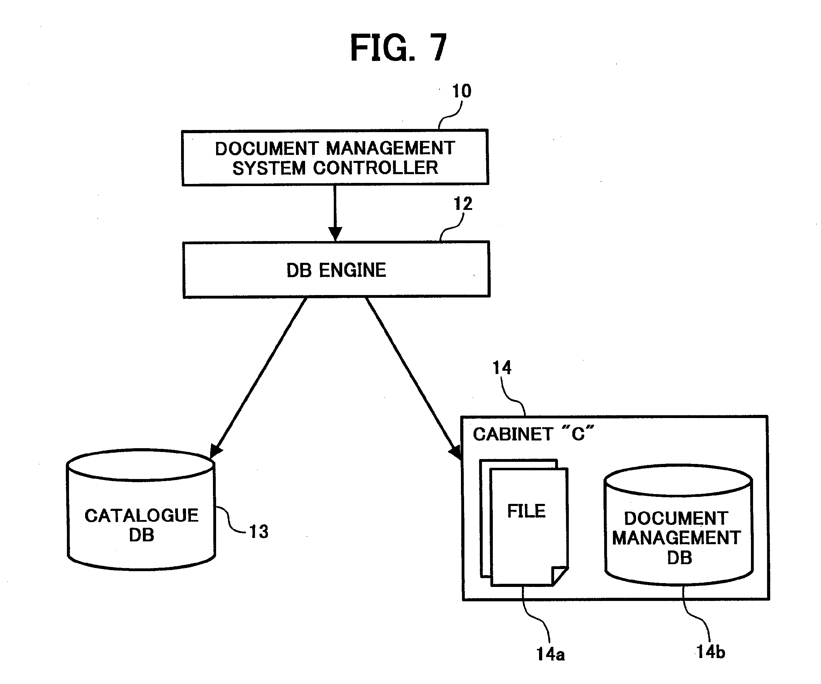

FIG. 7 illustrates another exemplary construction of the document management system 1 according to still another preferred embodiment of the present invention.

According to this embodiment, the document management system 1 includes the document management system controller 10, the DB engine 12, the catalogue DB 13 holding information of each cabinet and managing the progress status information of an operation of each cabinet, and the cabinet "C" 14. In this embodiment, secondary progress status information, which is information of subdivided progress statuses of an operation of each cabinet (described later more in detail) , is added to the basic information on each cabinet that is managed by the catalogue DB 13.

In this embodiment, whether or not a previous operation of a cabinet has abnormally ended is confirmed either by checking the progress status recorded in a recording medium as described with reference to FIG. 2, or when a normal ending assurance file is generated as described with reference to FIG. 5, by checking existence of the normal ending assurance file.

The reason that the secondary progress status information is provided separately from the progress status information is that the progress status information is used not only for checking whether or not recovering is necessary for a cabinet, but also for checking the status of the cabinet when the document management system 1 is being operated, which, if the progress status information includes the secondary progress status information, may be complicated.

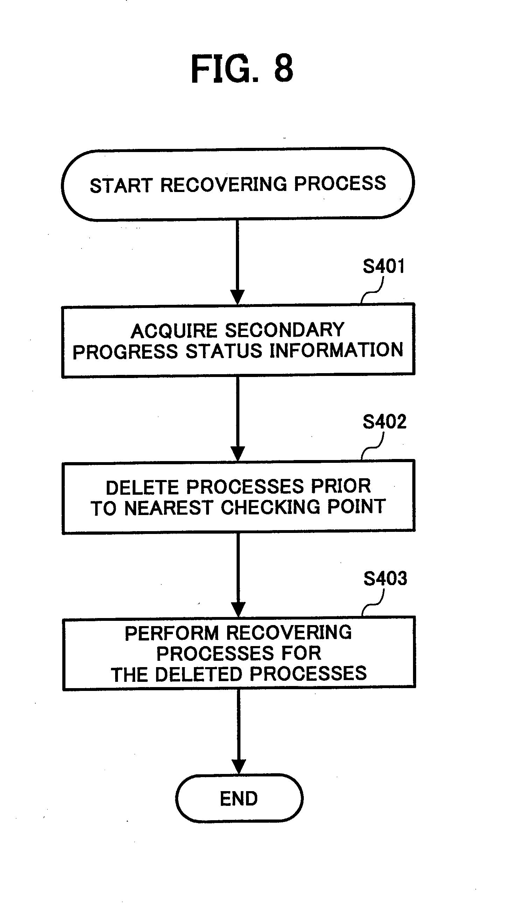

FIG. 8 illustrates a flowchart for explaining a procedure of a recovering process of the document management system 1 of the above-described still another preferred embodiment. The FIG. 8 illustrates a procedure when performing the processes described with respect to the steps S205-S209 of FIG. 4. The other processes are substantially the same as those described with reference to FIG. 4 or 6. That is, when starting either of the recovering processes of the steps S205-S209 of FIG. 4, the secondary progress status information is acquired from the catalogue DB (S401), and a process step during which the abnormal end has occurred is specified based upon the secondary progress status information, and the processes prior to a checking point (described later) nearest to the specified process step are deleted (S402). The recovering process is executed starting at the checking point.

The secondary progress status information is more specifically described taking as an example a case that the document management system 1 has abnormally ended when a cabinet is being generated.

The operation of generating a cabinet starting from a state that the cabinet does not exist to a state that the cabinet has been generated includes for example the following process steps, and a plurality of checking points for defining a starting position to start a recovery process are provided.
process step 0: the cabinet does not exist

### checking point I

process step 1: add information on a new cabinet to the catalogue DB
process step 2: generate a folder in file structure that is required for providing a document management DB
process step 3: generate necessary files other than those required for the document management DB
process step 4: generate the document management DB
process step 5: execute a DB schema (generate an SQL table and an index)

### checking point II

process step 6: generate information that is necessary in the document management DB at the initial state
process step 7: end the generation of the cabinet

For example, in the above-described operation of generating a cabinet, if the document management systems 1 abnormally ends when a DB schema is being generated (i.e., an index is being generated), which is indicated by information of the process step 5, the document management DB 14b is rolled back by the DB engine 12 to be returned to the state before the index is generated. At this time, the document management DB 14b is normal as a database, however, the cabinet being created is not a complete condition as a cabinet, so that a recovering process is necessary to be performed.

According to this embodiment, at least one checking point or a plurality of checking points (in this example, the checking points I and II) are provided with respect to an operation of a cabinet, and when recovering a cabinet, the secondary progress status information is acquired, and the cabinet is returned to the state at the checking point that is prior to and nearest to the process step indicated by the secondary progress status information so that the recovering process is performed starting at the checking point.

That is, if the document management system 1 has been caused to abnormally end when the process step 5 is being executed for example, as the recovering process, a process of returning to the state at the checking point I, i.e., the state that the cabinet does not exist, is performed. Specifically, the process of deleting the information on a new cabinet and the generated folder, file and document management DB is performed. If the document management system 1 has been caused to abnormally end when the process step 6 is being executed, in this case, the document management DB 14b is returned by rolling back thereof to the state immediately before the process step 6 has been performed. Therefore, the recovering process to return to the state at the checking point II is not necessary, and the process step 6 is performed, i.e., the operation of generating the cabinet is continued to be completed. Thus , with provision of a plurality of checking points for a recovering process in the secondary progress status information, when an abnormal end of the document management system 1 has occurred, it is not necessary to return to the state at the starting point, so that the recovering process can be promptly performed.

The mechanism and processes set forth in the present description may be implemented as a computer program programmed according to the teachings in the present specification, as will be appreciated to those skilled in the relevant arts. Appropriate software coding can be readily prepared by skilled programmers based on the teachings of the present disclosure, as will be also apparent to those skilled in the relevant arts.

The present invention thus includes a computer program product which may be hosted on a storage medium and includes instructions which when executed by a computer perform the processes set forth in the present description. The storage medium can include, but is not limited to, any type of disk including floppy disks, optical disks, CD-ROMs, magnetooptical disks, ROMs, RAMs, EPROMs, EEPROMs, flash memory, magnetic or optical cars, or any type of media suitable for storing electronic instructions.

Numerous additional modifications and variations of the present invention are possible in light of the above teachings. It is therefore to be understood that within the scope of the appended claims, the present invention can be practiced otherwise than as specifically described herein.

## Claims

1. A document management system comprising:
a plurality of document storing devices configured to store document information, respectively;
a recording device configured to record progress status information of an operation of each document storing device;
a retrieving device configured to check, when the document management system is activated, the recorded progress status information of an operation of each document storing device to retrieve a document storing device that cannot be activated;
a progress status information acquiring device configured to acquire from the recording device progress status information of an operation of the retrieved document storing device;
a fault recovery process content acquiring device configured to acquire a content of a fault recovery process relative to the retrieved document storing device based upon the acquired progress status information of an operation of the retrieved document storing device; and
an executing device configured to automatically execute the acquired content of a fault recovery process relative to the retrieved document storing device.

2. The document management system according to Claim 1, further comprising:
a normal ending assurance file generating device configured to generate a normal ending assurance file when the document management system has normally ended;
a normal ending assurance file existence checking device configured to check, when the document management system is activated, existence of the normal ending assurance file; and
a normal ending assurance file deleting device configured to delete the normal ending assurance file after the document management system has been activated.

3. The document management system according to Claim 1 or 2, wherein the plurality of document storing devices are cabinets, and
wherein the recording device recording progress status information of an operation of each cabinet is a catalogue DB configured to manage basic information of the cabinet.

4. The document management system according to Claim 1, 2 or 3 wherein the recording device is configured to record process step information indicating process steps of the operation of each document storing device and a plurality of checking points for defining a starting position to start a recovery process.

5. The document management system according to Claim 4, further comprising:
a process step information acquiring device configured to acquire, when the document management system is activated, process step information of the retrieved document storing device from the recording device to identify a process step of the operation of the retrieved document storing device in which the document management system has abnormally ended; and
a recovery process executing device configured to execute the recovery process starting from a checking point that is before and nearest to the process step in which the document management system has abnormally ended.

6. A network system, comprising:
a document management system according to any of the preceding Claims: and
a client computer configured to access the document management system.

7. A recovery method for a document management system, comprising the steps of:
recording progress status information of an operation of each cabinet of the document management system by a recording device;
checking, when the document management system is activated, the recorded progress status information of an operation of each cabinet to retrieve a cabinet that cannot be activated;
acquiring from the recording device progress status information of an operation of the retrieved cabinet;
acquiring a content of a fault recovery process relative to the retrieved cabinet based upon the acquired progress status information of an operation of the retrieved cabinet; and
automatically executing the acquired content of a fault recovery process relative to the retrieved cabinet.

8. The recovery method according to Claim 7, further comprising the steps of:
generating a normal ending assurance file when the document management system has normally ended;
checking, when the document management system is activated, existence of the normal ending assurance file; and
deleting the normal ending assurance file after the document management system has been activated.

9. The recovering method according to Claim 7 or 8, wherein the recording step records the progress status information of each cabinet in a catalogue DB for managing basic information of each cabinet.

10. The recovery method according to Claim 7, 8 or 9, wherein the recording step records process step information indicating process steps of the operation of each cabinet and a plurality of checking points for defining a starting position to start a recovery process.

11. The recovering method according to Claim 10, further comprising the steps of:
acquiring, when the document management system is activated, process step information of the retrieved cabinet from the recording device to identify a process step of the operation of the retrieved cabinet in which the document management system has abnormally ended; and
executing the recovery process starting from a checking point that is before and nearest to the process step in which the document management system has abnormally ended.

12. A computer program comprising computer program instructions that, when executed by a computer system, causes a document management system to perform a fault recovery method according to any one of claims 7 to 11.
